Europäisches Patentamt

European Patent Office

Office européen des brevets

(19)

(11)  **EP 1 732 011 A1**

(12)  **EUROPEAN PATENT APPLICATION**

(43) Date of publication:
**13.12.2006 Bulletin 2006/50**

(51) Int Cl.:
*G06F 17/16* (2006.01)      *G05B 19/02* (2006.01)
*H02K 7/09* (2006.01)      *F16C 39/06* (2006.01)

(21) Application number: **05405656.9**

(22) Date of filing: **23.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **Mecos Traxler AG
8404 Winterthur (CH)**

(72) Inventor: **Bühler, Philipp
8005 Zürich (CH)**

(74) Representative: **Liebetanz, Michael et al
Isler & Pedrazzini AG,
Patentanwälte,
Postfach 6940
8023 Zürich (CH)**

(54)  **Compact magnetic bearing device and method of operating the device with calculation of distribution of currents in the windings**

(57)      A magnetic bearing device, preferably of the "self-bearing motor" type, is disclosed which enables active magnetic suspension of a rotor (1) along three translational directions, and which preferably enables full active five-axis control plus motoring torque, with a single stator-rotor combination, without providing additional bearing elements. To this end, the controller of the device is specifically adapted to provide currents to stator windings in a fashion which leads to both radial and axial suspension forces. In one embodiment, the rotor comprises a disk (103) with regularly spaced poles, and the stator comprises a plurality of regularly spaced overlapping windings (211-216) arranged on one or both sides of the disk. In another embodiment, the rotor is cylindrical, with poles on the cylindrical surface, and the stator comprises regularly spaced overlapping windings disposed in a cylindrical arrangement around the rotor.

FIG. 1

EP 1 732 011 A1

## Description

### Field of the invention

The present invention relates to a compact magnetic bearing device, preferably of the "self-bearing motor" type, and to a method of operating such a magnetic bearing device.

### Background of the invention

Magnetic bearings have found widespread applications in different fields of technologies where a rotor is to be supported in a contactless manner. To a first approximation, the rotor may often be considered to constitute a rigid body, which has a total of six degrees of freedom. One degree of freedom is the rotation around the rotation axis, leaving five degrees of freedom (three translational, two for tilts) along which the rotor must be supported. Only one, several or all of these degrees of freedom may be supported magnetically, and support may be achieved in an active or passive manner. In the case of active control, usually a plurality of windings are provided which act to generate magnetic bearing forces on the rotor. If the rotor is driven by an electric motor, the windings for the magnetic bearings are usually separate from the windings of the motor, and these windings do not share any magnetic flux paths.

In recent years, however, magnetically levitated motors have been developed in which one set of windings has both a bearing function (as in a traditional magnetic bearing device) and a driving function (as in a traditional electric motor) at the same time. More precisely, in these devices, the magnetic flux for magnetic levitation and the magnetic flux for torque generation share a common flux path. Such a device is often called a "self-bearing motor".

Generally, however, in such self-bearing motors, at least one degree of freedom is stabilized either by conventional means (e.g., by a ball bearing or a fluid bearing), by passive magnetic action, or by a separate active magnetic bearing element (having its own, separate magnetic flux path). For example, it is known that a self-bearing motor stabilizes two radial degrees of freedom and generates a torque for rotation, while separate bearing elements are needed for stabilization of the axial degree of freedom and of tilting motions.

A self-bearing motor of this kind is disclosed in U.S. Patent No. 6,611,073. The rotor comprises four magnetic poles at intervals of 90 degrees. The stator comprises a winding group for levitation and a winding group for torque generation. Each of the winding groups has twelve concentrated winding sections spaced at intervals of 30 degrees. Each two of these winding sections spaced at intervals of 90 degrees are connected to form a full winding, such that each winding group comprises six full windings. In one embodiment, the rotor takes the shape of a disk, and the stator windings are arranged relative to the rotor disk in an axially confronting configuration. Two radial translational degrees of freedom may be controlled with this arrangement in addition to torque generation. For controlling also the tilting degrees of freedom, the document suggests to provide a second rotor disk together with a second stator. In addition, the axial translational degree of freedom must be supported by an additional, separate thrust bearing. This is disadvantageous, as the provision of such additional bearing elements increases costs and renders the device more bulky.

The same disadvantages still arise if a compact magnetic bearing device without the need of generation of a motoring torque is desired, or if active control of tilting motions is unnecessary. In all these cases it is generally necessary to provide active axial magnetic bearing elements which are spatially, electrically and magnetically separate from the radial bearings, rendering the device unnecessarily bulky.

### Summary of the invention

It is therefore an object of the present invention to provide a compact magnetic bearing device which combines the functions of axial and radial magnetic suspension in one rotor-stator combination, i.e., which enables active control of all three translational degrees of freedom without the need to provide spatially separate bearings for the generation of radial and axial bearing forces.

This object is achieved by a magnetic bearing device with the features of claim 1.

It is a further object of the present invention to provide a method of operating such a magnetic bearing device in a fashion which provides control of all three translational degrees of freedom.

This object is achieved by a method according to claim 13.

Advantageous embodiments of the invention are laid down in the dependent claims.

Thus, a magnetic bearing device is provided which comprises

- a rotor for rotation around a rotation axis which comprises at least four magnetic poles for generating a magnetic field, said magnetic poles being disposed at regular intervals around said rotation axis and having alternating polarities around said rotation axis;
- a stator in a confronting configuration with said rotor, said stator comprising at least six windings arranged at regular intervals around said rotation direction;

- sensors for detecting radial and axial translational displacements along three different (in particular, linearly independent and preferably orthogonal) directions and for detecting a rotational state of said rotor; and
- a controller receiving translational displacement signals and rotational signals from said sensors and supplying currents to said windings for interacting with said magnetic fields to generate forces on said rotor.
  The controller is specifically adapted to supply,
- in response to a radial translational displacement and depending on said rotational state, a distribution of currents to said windings which acts to reduce said radial translational displacement, and,
- in response to an axial translational displacement and depending on said rotational state, a distribution of currents to said windings which acts to reduce said axial translational displacement.

In the present invention it has been realized that in many rotor-stator-configurations it is possible to achieve not only radial control, but also axial control, by carefully considering the magnetic field directions and the directions of current flow depending on the rotational state of the rotor, and by appropriately adapting the controller. In general terms, the controller will provide a current distribution to the windings which interacts with the magnetic field to generate Lorentz forces. The direction of such a force is well known from Fleming's lefthand rule: It is perpendicular both to the plane spanned by the direction of the current and by the magnetic field. Usually, the magnetic field generated by the magnets on the rotor has components in at least two directions, in particular, in a direction extending away from the magnet's surface, and in a direction parallel to the magnet's surface. Also, usually the windings (= coils) comprise several sections in which the current flows in different directions. It has been realized in the present invention that by an appropriate selection of the distribution of currents (which also implies appropriate timing of the currents relative to the rotation of the rotor), a net force in any arbitrary direction in space may be generated. In general, it will depend on the concrete geometric arrangement of the magnets and the windings which field components should interact with which current components, depending on the rotational state of the rotor, to achieve the desired net result. The rotational state comprises information such as the rotary position (= rotation angle), the angular velocity etc. Generally, it will be sufficient for achieving control to determine the rotation angle at certain sampling points.

There are many ways of ensuring that an appropriate current distribution is provided. One specific example of a method which ensures this will be discussed below. Independent of the method employed for calculating the current distribution as a function of the rotary angle, however, the controller may comprise a digital signal processor (DSP) receiving at its input digitized axial and radial translational displacement signals and signals indicating the rotary position of the rotor. At its output, the DSP will provide digitized current signals. The DSP will be programmed (in software or hardware) to calculate, from the input signals and at selected rotary positions of the rotor, a current distribution which will interact with the magnetic field provided by the magnetic poles on the rotor to generate a force distribution which will act on the rotor to reduce both the radial and axial translational displacements. To do this efficiently, the controller (and in particular, the DSP) may comprise two distinct modules, implemented in software or hardware, as further discussed below.

A variety of geometric arrangements for the rotor and stator are possible. In one particularly advantageous geometric arrangement,

- the rotor comprises a disk having a first and a second face,
- the magnetic poles are arranged on the first face or both faces of said disk such that the magnetic field has both axial and circumferential components,
- and the windings are arranged in an axially confronting configuration with the disk in a manner that each current through each winding has at least one radial component.

Then the controller is advantageously specifically adapted to selectively supply a distribution of currents to the windings in a manner that,

- in response to a radial translational displacement of said rotor, the radial components of the currents interact with the axial components of the magnetic field so as to generate selected tangential forces which add up to a radial restoring force, and,
- in response to an axial translational displacement of the rotor, the radial components of the currents interact with the circumferential components of said magnetic field so as to generate selected axial forces which add up to an axial restoring force.

This yields an extremely compact device. In contrast to prior-art devices, the device of the present invention according to this embodiment utilizes the circumferential components of the magnetic field to generate axial restoring forces on the rotor. In particular, in contrast to the present invention, the controller of US 6'611'073 fails to provide current changes in response to an axial displacement of the rotor.

Provided that the magnetic field generated by the magnetic poles on the rotor, the rotary position (= rotation angle) of the rotor and the positions of the winding sections with a radial component are known, it is a straightforward exercise to determine current distributions which lead either to radial or to axial restoring forces. A "recipe" for one possible way of calculation of the currents will be provided below.

In one particularly advantageous embodiment, the rotor comprises a first group of four magnetic poles disposed on the first face of the rotor disk and a second group of four magnetic poles disposed on the second face. This may be most easily achieved by providing, within the disk or on its circumference, four axially magnetized magnets at equal intervals around the rotation axis. The stator comprises a first winding set of six windings disposed in an axially confronting configuration with the first face of the disk, and a second winding set of six windings disposed in an axially confronting configuration with the second face of the disk. The windings are preferably arranged in a particular manner: Each winding in each winding set overlaps with two other windings of the same winding set. In other words, if the windings are concentrated windings, each winding spans a region of 90° along the rotational direction, and centers of the six windings are separated by 360°/6 = 60° from each other. If the windings are distributed windings, the range over which the winding ranges cannot so easily be defined in general, however, the spacing of the centers will still be 60°. As will be seen further below, with such a device it is not only possible to achieve active magnetic control of the three translational degrees of freedom, but also of the two tilt degrees of freedom, as well as the application of a motoring torque. Thus an extremely compact, robust and simple self-bearing motor is provided with active control of all six degrees of freedom of the rigid rotor.

The control of the currents in the windings is improved, and amplifier construction is simplified, if each of the first and second winding sets consists of two subsets of three non-overlapping windings each, and if the windings of each subset are connected in a star configuration to form a three-phase system each. Thus, there are 2 x 2 = 4 independent three-phase systems. Preferably there is no connection of the star point (= common node) to the amplifier (i.e., no neutral lead). This leads to four star-point conditions from Kirchhoffs first law. Further below it will be discussed how these conditions may advantageously be taken into account for control. In particular, it has been realized by the present invention that with these conditions, it is possible to achieve full active five-axis control plus torque generation in a particularly advantageous manner which minimizes the total required current.

In another advantageous geometric arrangement,

- the rotor comprises a cylindrical body having a circumferential surface,
- the magnetic poles are arranged on the circumferential surface such that the magnetic field extends around the cylindrical body,
- and the windings are arranged in a radially confronting configuration around the cylindrical body such that each current through each winding has both an axial and a circumferential component.
  Then the controller is advantageously specifically adapted to selectively supply a distribution of currents to the windings in a manner that,
- in response to a radial translational displacement of the rotor, the axial components of the currents interact with said magnetic field (in particular, with its radial components) so as to generate selected tangential forces which add up to a radial restoring force, and
- in response to an axial translational displacement of the rotor, the circumferential components of the currents interact with the magnetic field (in particular, with its radial components) so as to generate selected axial forces which add up to an axial restoring force.

In this arrangement, it is the circumferential components of the currents which interact with the radial field components to provide a net axial restoring force. Again, this possibility has previously been disregarded in the prior art.

In this configuration, it is advantageous if the rotor comprises four magnetic poles, and if the stator comprises a first winding set of six windings and a second winding set of six windings, said second set being shifted from said first set along said rotational axis, and wherein each winding in each winding set overlaps with two other windings of the same winding set. The four magnetic poles should then extend over an axial range such that both the first and the second winding sets may interact with the magnetic field generated by the poles. Alternatively, it is of course possible to provide two axially separated sets of four poles each, wherein each set of poles interacts with one winding set.

Again, it is advantageous to connect the windings in the winding sets to form three-phase systems. In particular, advantageously each of the first and second winding sets consists of two subsets of three windings each, and the windings of each subset are connected in a star configuration, as for the above-described first geometric arrangement.

Other advantageous arrangements, either with a disk-type rotor or with a cylinder-type rotor, have the following numbers of magnetic poles and the following numbers of windings:

- four magnetic poles and six windings, wherein each winding overlaps with two other windings;
- four magnetic poles and eight windings, wherein each winding overlaps with two other windings;

- six magnetic poles and eight windings, wherein each winding overlaps with two other windings;
- six magnetic poles and nine windings, wherein each winding overlaps with two other windings;
- six magnetic poles and twelve windings, wherein each winding overlaps with two other windings; or
- six magnetic poles and twelve windings, wherein each winding overlaps with four other windings.

Of course, also other combinations are possible. However, a higher number of windings will generally increase size, the complexity of the setup, and therefore costs, and will usually be advantageous only in special situations, e.g., for large-diameter rotors. A higher number of poles will increase the ratio between the frequency of the control currents and the rotation frequency, and will likewise be advantageous only in special situations, e.g., for applications with slow rotation rates.

Advantageously, the magnetic bearing device according to the present invention is not only adapted to control translational displacements of the rotor, but also tilt displacements. Thus, the magnetic bearing device preferably comprises sensors for determining tilt displacements around two non-coinciding (linearly independent) radial tilt axes, the controller receives signals from said sensors, and the controller is preferably specifically adapted to supply, in response to a tilt displacement of said rotor and depending on the rotational state of said rotor, a distribution of currents to the windings which generate a restoring moment of force which acts to reduce the tilt displacement. In this case, full active five-axis control is implemented with a single rotor-stator combination.

The sensors for determining tilt displacements may be separate sensors, or they may be identical with the sensors for determining translational displacements. In the latter case, the determination of the tilt displacements generally involves the determination of the differences of translational displacements for two different regions of the rotor. One common example is the provision of two radial displacement sensors measuring radial displacements in the same direction, e.g., along the x axis, at two different positions along the rotor axis. By determining the difference of the two radial displacements, a measure of the tilt around a perpendicular radial axis, in the present example, the $y$ axis, may be derived. Likewise, e.g., two or more axial displacement sensors at different positions near the circumference of the rotor may be employed, especially if the rotor comprises a disk of a comparatively large diameter.

In addition, it is advantageous if the controller is further specifically adapted to supply, depending on the rotational state of the rotor, a distribution of currents to said windings which act to generate a motoring torque around the rotation axis. This provides a very compact self-bearing motor.

While concentrated windings may be used, advantageously each winding is a distributed winding. The term "distributed winding" encompasses any winding having at least one section in which a plurality of conductors which carry a current of essentially the same direction with a component perpendicular to the rotational direction spread over a certain angular range along the rotational direction, e.g., at least over a range of 5° or 10°. Such a winding can be manufactured in an essentially flat shape while still having the capability of carrying large currents.

In particular, it is advantageous if the windings are implemented as rigid or flexible printed circuit boards, resulting in a very simple, cost-efficient and robust design of the device.

A slotless design is preferred. In a slotted design, pole pieces are provided along the rotation direction between the winding sections. In a slotless design, in contrast, no such poles are present between the windings. Of course, some kind of yoke for guiding the magnetic flux may still be provided, however, this yoke will not have individual "salient" poles.

A method of operating a magnetic bearing device according to the present invention comprises the steps of

(a) determining radial and axial translational displacements of the rotor along three linearly independent directions by the sensors;
(b) based on the translational displacements, calculating a generalized force vector for reducing both radial and axial translational displacements;
(c) determining a rotary position of the rotor;
(d) depending on the rotary position, calculating a distribution of currents in the windings which interact with said magnetic field in a manner to yield a distribution of forces which approximate the generalized force vector;
(e) supplying said distribution of currents to said windings.

While the computational step (d) must be comparatively fast, the time scale being determined by the rotation frequency, the computational step (b) may be slower, the time scale being determined by the displacement rates. In consequence, steps (c) to (e) will generally be repeated a plurality of times between repetitions of step (a) and (b). It is therefore advantageous to perform step (d) in a time-saving manner as follows:

(d1) applying to said generalized force vector a complex reference mapping (or, equivalently, two real reference mappings) which maps generalized force vectors to currents, yielding a complex reference distribution of currents (or, equivalently, two real reference distributions);
(d2) for each rotary position ($\Phi$) determined in step (c), computing said distribution of currents from said complex reference distribution of currents (or, equivalently, said real reference distributions) by multiplication with trigonometric functions (and, where necessary, addition).

Substep (d1) need only be executed once for each generalized force vector determined in step (b). This step is relatively time-consuming as it involves application of the (usually linear) complex reference mapping. Usually this is implemented as a (complex) matrix multiplication. Equivalently, instead of a single complex reference mapping, two real reference mappings corresponding to the real and imaginary parts of the complex mapping may be applied according to standard complex algebra. The result of this step may be stored and re-used upon each repetition of step (d). Substep (d2) then provides a simple trigonometric calculation scheme of the current distribution (broadly understood, an interpolation scheme). This substep involves only the evaluation of trigonometric functions and the multiplication of these with complex vectors or, equivalently, the multiplication of these with real vectors and the addition of the resulting vectors, which is significantly faster than a matrix multiplication.

Accordingly, the controller may comprise two distinct modules for this purpose. The first module comprises a mapper for executing the reference mapping, e.g., a matrix multiplicator together with a memory for storing the matrix (or matrices) representing the reference mapping(s), while the second module comprises an interpolator, e.g., a memory for storing the reference current distribution(s), a trigonometric multiplicator for multiplying the real and imaginary components of the complex reference current distribution (or the real reference current distributions) by sine/cosine functions, and an adder for adding the results of these multiplications. Only the second module needs to be fast. These modules may be implemented in software or hardware.

The reference mapping(s) involved in substep (d1) depend only on the design of the actual magnetic bearing device, in particular, on its geometry. This complex reference mapping (or the real reference mappings) therefore need to be determined only once for each particular magnetic bearing device. This may involve the following steps:

(i) for each of at least two predetermined reference rotary positions, determining an approximate real linear mapping which maps currents in each winding to generalized force vectors caused by said currents;
(ii) determining a number of additional, linearly independent linear relations between said currents, wherein said number is the difference between the number of currents and the number of degrees of freedom to be controlled, optionally under the condition that the sum of squared current values is minimized;
(iii) from said real linear mappings, determining a complex linear mapping which maps currents to generalized force vectors under the condition that said additional relations are fulfilled;
(iv) inverting said complex linear mapping to yield said complex reference mapping (or said two real reference mappings).

The comparatively time-consuming inversion therefore need not be performed in the controller itself at all. Rather, the reference mappings may be calculated beforehand and may be stored in the controller. The determination of the approximate linear mappings in step (i) may be by actual measurements (e.g., on a prototype), or these mappings may be determined by simulations.

**Brief description of the drawings**

The invention will be described in more detail in connection with an exemplary embodiment illustrated in the drawings, in which

Fig. 1    shows a highly schematic partial perspective view of a self-bearing motor with a disk rotor according to a first embodiment of the present invention;
Fig. 2    shows a schematic top view onto a disk rotor with four magnetic poles together with twelve winding sections;
Fig. 3    shows a schematic developed view of the arrangement of a disk rotor and a stator;
Fig. 4    shows a schematic wiring diagram of a stator comprising two stators with six windings each connected to form two three-phase systems each;
Fig. 5    shows a diagram of current values as a function of rotation angle;
Fig. 6    shows a schematic top view of a rotor with four poles in a first orientation;
Fig. 7    shows a schematic top view of a rotor with four poles in a second orientation;
Fig. 8    shows a schematic top view of a stator with eight windings;
Fig. 9    shows a schematic top view of a rotor with six poles;
Fig. 10   shows a schematic top view of a stator with twelve windings;
Fig. 11   shows a schematic top view of a stator with nine windings;
Fig. 12   shows a schematic top view of another stator with twelve windings;
Fig. 13   shows a schematic sectional view of a rotor with four poles together with twelve winding sections;

Fig. 14    shows a schematic perspective view of a cylindrical rotor with four poles;
Fig. 15    shows a schematic perspective view of a cylindrical stator;
Fig. 16    shows a schematic plan view of a winding;
Fig. 17    shows a schematic developed view of the stator of Fig. 15;
Fig. 18    shows a circuit of an H-bridge amplifier;
Fig. 19    shows a first schematic wiring diagram;
Fig. 20    shows a second schematic wiring diagram;
Fig. 21    shows the layers of a four-layered printed circuit board implementing two times three windings;
Fig. 22    shows the layers of a two-layered printed circuit board implementing a multi-axis displacement sensor (including wiring for the windings of Fig. 21); and
Fig. 23    shows the layers of a two-layered printed circuit board implementing a rotation sensor.

## Detailed description of the invention

### First embodiment

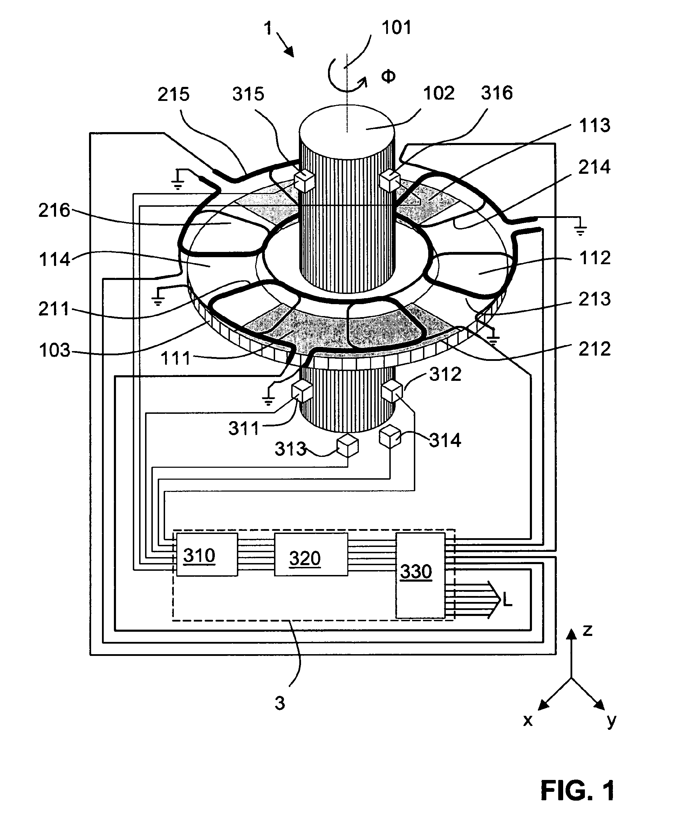

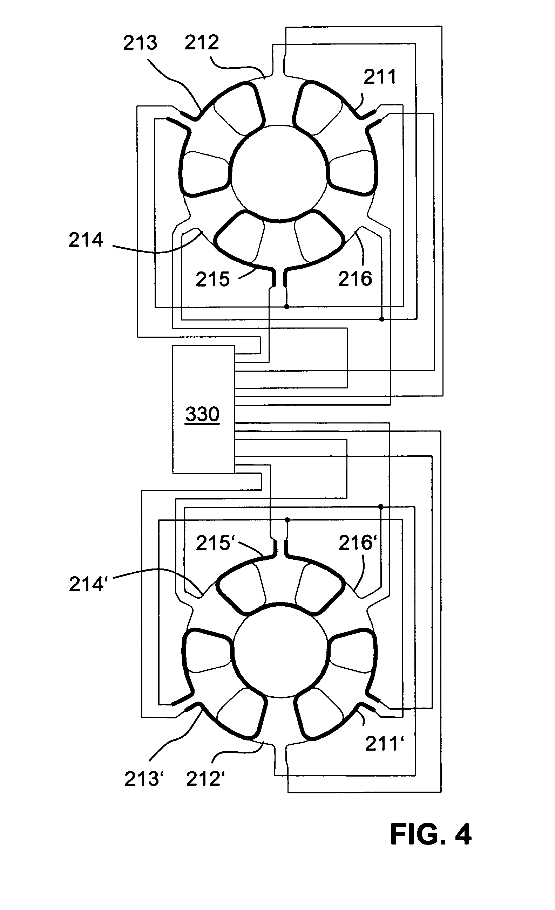

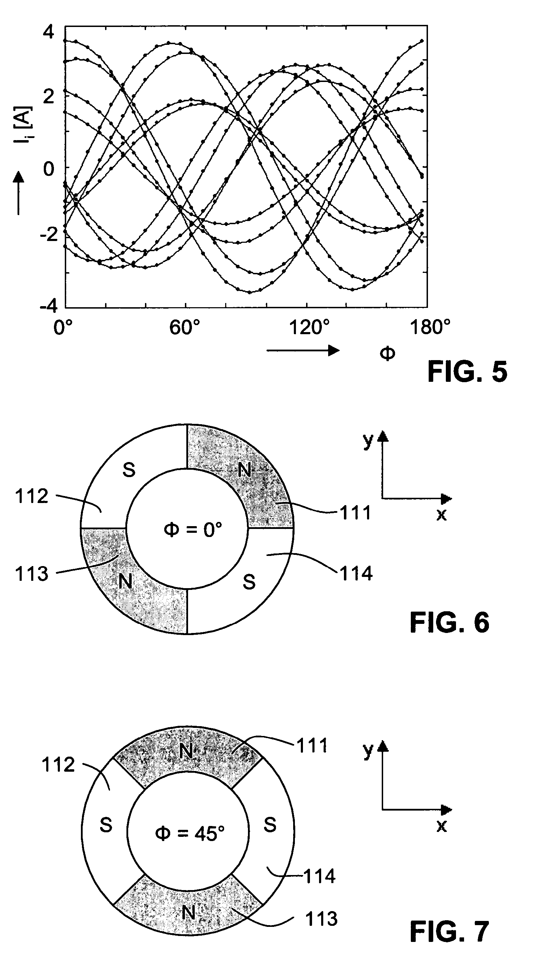

The basic principles of the device of the present invention and its operation will now be explained with reference to Figs. 1 to 3, which show a first embodiment of the present invention, with reference to Fig. 4, which relates to a variant of this first embodiment, and with reference to Figs. 5 to 7.

Fig. 1 illustrates, in a schematic partial perspective view, the setup of a self-bearing motor according to the first embodiment. A rotor 1 for rotation about an axis 101 comprises a rotary shaft 102, on which a rotor disk 103 is mounted. The rotation axis defines the z direction of a space-fixed coordinate system ($x$, $y$, $z$). The rotor disk comprises four permanent magnets 111, 112, 113 and 114 magnetized along the z direction, which are arranged with alternating polarities (north pole N, south pole S) at equal intervals along the rotational direction $\Phi$.

The upper half of a stator is arranged above the rotor disk 103, of which only the windings 211, 212, 213, 214, 215 and 216 are shown in a highly schematic manner. For simplicity, each winding is shown with a single turn only, while in reality each winding will generally have a plurality of turns. The windings overlap. In order to make the different windings better distinguishable, they are drawn with different line thicknesses. This does not mean, however, that the windings will generally have different number of turns or that they are treated differently in any other way. The windings drawn in thick lines may best be considered as windings of a first winding layer, while the windings drawn in thin lines may be considered as belonging to a second winding layer, these two layers being very closely spaced from each other. In addition, the upper half stator will generally comprise a disk-shaped pole piece which may or may not be slotted and which is disposed above the stator windings, but which is not shown in Fig. 1 for the sake of clarity. This pole piece serves to guide and close the field lines of the permanent magnets of the rotor.

A second (lower) half stator, which is not shown in Fig. 1, is disposed below the rotor disk. This second half stator is largely identical to the first (upper) half stator, i.e. it comprises six windings arranged in the same form as in the upper half stator and a disk-shaped pole piece disposed below these windings. The two half stators together form the complete stator for the rotor.

Six sensors determine the position and orientation of the rotor in space: a first lower radial displacement sensor 311 for measuring displacements of a lower portion of the rotary shaft 102 in a first radial direction (the x direction); a second lower radial displacement sensor 312 for measuring displacements of a lower portion of the rotary shaft 102 in a second radial direction (the $y$ direction) which is orthogonal to the first direction; first and second upper radial displacement sensors 315, 316 for measuring radial displacements of an upper shaft section along the $x$ and $y$ directions; an axial displacement sensor 313 for measuring axial displacements of the rotor along the z direction; and a rotation sensor 314 for determining the rotary state of the rotor 1 around its rotation axis. The rotation sensor may be a so-called pulse sensor which serves to measure the rotation frequency and phase by delivering one or several pulses for each rotation for the rotor, or it may be a so-called resolver which directly delivers resolved angular information about the rotation phase (rotation angle $\Phi$) of the rotor.

The signals of the sensors 311 to 316 are fed to operating means in the form of a controller 3 which comprises a detection unit 310, a control unit 320 and an amplifier unit 330. The detection unit 310 serves to drive the sensors and to convert the sensor signals into distance information and angular information, respectively. Usually, this information will be provided in digital form. The information is then fed to the control unit 320, which derives control signals from the information provided by the sensors. These control signals may be, e.g., generalized current values for the twelve windings of the upper and lower half stators. The control signals are fed to the amplifier unit 330, which drives the windings by providing the required currents to them.

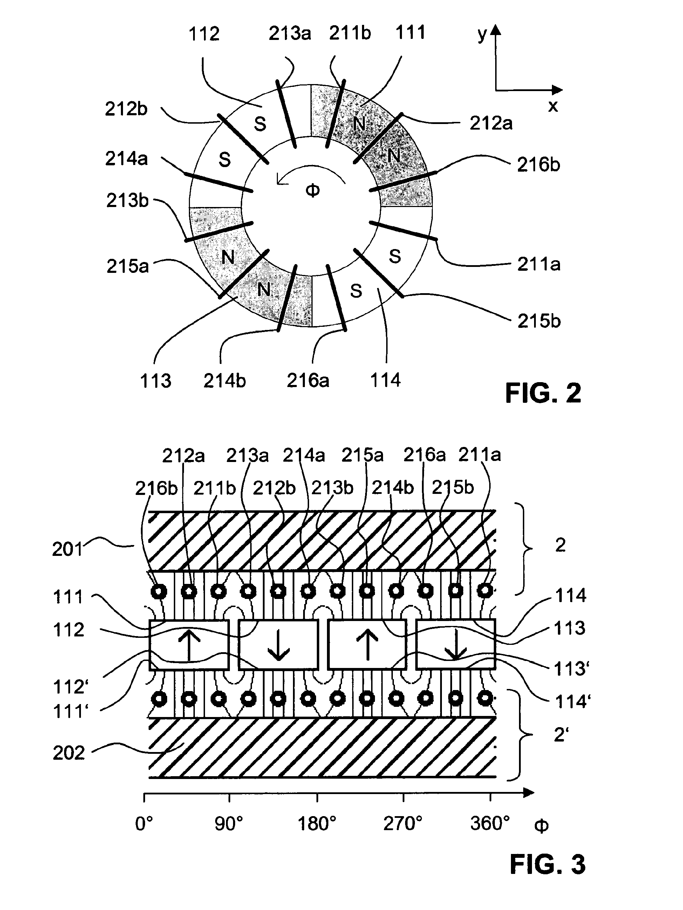

The arrangement of the windings is illustrated in Fig. 2. This Figure provides a very schematic top view of the rotor disk together with a plurality of winding sections 211a, 211 b, 212a, 212b, 213a, 213b, 214a, 214b, 215a, 215b, 216a, and 216b. Only those sections of the windings 211 to 216 are shown which extend in the radial direction, while the circumferential portions of the windings are not shown for the sake of clarity. The winding sections are arranged in a regular manner at equal intervals of 30 degrees along the rotational direction Φ; they are connected by pairs to form windings in the manner as illustrated in Fig. 1. Each winding section is designated by a reference sign which reflects to which winding it belongs; by the way of example, winding sections 211 a and 211 b are the radial sections of winding 211. The radial winding sections of each winding are thus separated by an angle of 90 degrees in the rotational direction, i.e., by an angle which is three times the repeating angle between adjacent winding sections.

Fig. 3 illustrates the rotor together with the upper and lower half stators in a schematic developed view, i.e., along two of three cylindrical coordinates. In this view, the horizontal axis corresponds to the rotational direction Φ, while the vertical direction corresponds to the $z$ direction. The radial direction extends perpendicular to the paper plane.

Of the rotor disk, only the permanent magnets 111 to 114 are shown. Above these, the twelve winding sections of the upper half stator 2 are shown. In addition to the windings, the upper half stator 2 comprises a flat, disk-shaped pole piece 201 of a material with a high magnetic permeability, which is disposed on top of the windings. Similarly, below the rotor disk, the twelve winding sections and the pole piece 202 of the lower half stator 2' are shown. Some representative field lines of the magnetic field generated by the permanent magnets 111 to 114 and guided by the pole pieces 201 and 202 are also shown in the region between the rotor disk and the pole pieces. These field lines extend mostly in the axial (z) direction near the centers of the magnets, but have an appreciable circumferential (Φ) component near the edges of the magnets.

In the following, the principle of operation of the present invention will be explained. Currents are applied to the winding sections of the stator. This will result in forces, moments of force and torque on the rotor by the action of Lorentz forces. In the context of the present document, the terms "torque" and "moment of force" are principally regarded as synonyms; however, the term "torque" is preferably used for referring to a moment around the z axis, i.e., a moment that acts to accelerate or decelerate the rotation of the rotor around its rotation axis, while the term "moment of force" is used for a moment around any radial direction, which acts to induce or decrease a tilt of the rotor axis away form the $z$ direction. It will be shown that forces in any arbitrary direction in space as well as moments of force or torques, respectively, around any arbitrary axis in space may be generated by supplying appropriate currents to the winding sections of the stator. In particular, both radial and axial translational bearing forces can be obtained.

In a first step, it will be shown by the way of examples how forces, torque and moments can be generated for the particular rotational position of the rotor shown in Figs. 1 to 3 and Fig. 6, which is designated as Φ = 0. In these examples, currents are only applied to the windings of the upper half stator 2. In general, however, it will be advantageous to supply currents to the windings of both half stators.

As a first example, a net force $F_x$ along the x axis will result by providing currents of equal magnitude, but different directions to four winding sections as detailed in Table 1. This force results from interaction of an axial magnetic field component with currents in selected radial directions.

**Table 1:** Current distribution for generating a force $F_x$ in the x direction

| winding section | direction of current |
| --- | --- |
| 212a | radially in |
| 212b | radially out |
| 215a | radially out |
| 215b | radially in |

Taking into account that each two of these winding sections are connected to form a full winding, this means that a net force $F_x$ in the $x$ direction results by providing currents with equal magnitude, but opposite signs to windings 212 and 215, respectively. In this context, the sign of a current is defined as follows. A current through a winding is designated as "negative" if the current in the first radial winding section along the rotation direction flows from the outside to the inside ("radially in"). In other words, the current is designated as negative if it flows in a clockwise direction. It is designated as "positive" if the current flows in the opposite (anti-clockwise) direction. Each current is fully specified by its magnitude (absolute value) and its sign.

Likewise, a net force $F_y$ in the $y$ direction results by providing currents of equal magnitude to the windings 213 and 214 with positive sign and to the windings 211 and 216 with negative sign, again utilizing the interaction of axial magnetic field components with currents in selected radial directions.

As another example, a net torque $T_z$ around the $z$ axis will result by providing currents of equal magnitude and equal sign to (at least) the two windings 212 and 215, as detailed in Table 2. Also this torque results from interaction of axial magnetic field components with selected radial currents.

**Table 2:** Current distribution for generating a torque $T_z$ around the $z$ direction

| winding section | direction of current |
|---|---|
| 212a | radially in |
| 212b | radially out |
| 215a | radially in |
| 215b | radially out |

As a further example, it will now be explained how a force $F_z$ along the $z$ direction may be generated in a similar manner, without employing any additional bearing elements. This is based on the realization that also the circumferential components of the magnetic field in the region of the winding sections may be utilized. While the magnetic field is mostly axially oriented in the regions near the centers of the permanent magnets, circumferential components are strongest in the regions where two adjacent magnets are close to each other. A current flowing radially will accordingly interact with the circumferential component of the magnetic field and lead to a Lorentz force having an axial (z) component. By appropriately choosing the currents in the winding sections, a net pure axial force may be generated. An appropriate set of currents of equal magnitude, but different signs, are given in Table 3.

**Table 3:** Current distribution for generating an axial force $F_z$ in the $z$ direction

| winding section | direction of current |
|---|---|
| 211a | radially out |
| 211b | radially in |
| 213a | radially in |
| 213b | radially out |
| 214a | radially out |
| 214b | radially in |
| 216a | radially in |
| 216b | radially out |

In other words, a net force $F_z$ in the axial (z) direction results by providing currents of equal magnitude to windings 211, 213, 214 and 216, where the direction of current is positive for windings 211 and 214 and negative for windings 213 and 216.

Finally, a moment of force $T_x$ or $T_y$ around the radial $x$ or $y$ direction, with some admixtures of x, $y$, and/or $z$ forces, results by appropriately changing the directions of the currents in windings 211, 213, 214 and 216.

In principle, it is therefore possible to generate forces, torque and moments for all six degrees of freedom of the rotor, at least for the rotary position $\Phi = 0$, by only using the windings of one of the two half stators. In general, both half stators will be used. It is clear that then a multitude of choices exist for the currents if a particular force, torque or moment is desired at an arbitrary rotary position of the rotor. The driving unit for the windings of the magnetic bearing device will therefore have to be adapted to provide suitable current distributions according to a predetermined control scheme. These may be implemented in hardware or software in the form of a controller which is able to provide a current distribution for generating a radial bearing force as well as a current distribution for generating an axial bearing force.

In the following, a mathematical framework will be developed which allows to calculate such current distributions suitable for generating a particular force, torque or moment for any arbitrary rotary position $\Phi$. The analysis starts by considering a current in each single winding section and determining the forces, torque and moments resulting from such a single hypothetical current. Their directions and magnitudes will generally depend on the rotary position of the rotor, on the number of turns in each winding, on the geometries of the stator and the rotor, including the distribution of conductors in the windings, and on the strength of the permanent magnets of the rotor. If magnetic saturation effects can be neglected, the whole system may be described by a linear matrix equation:

(Equation 1) $$\bar{F} = \underline{\underline{T}}_{CC}(\phi) \cdot \bar{I}_C .$$

Here, $\bar{F}$ is a generalized force vector having as elements the linear forces in the *x, y,* and *z* direction, the moments of force around the *x* and *y* axes, and the torque around the z axis:

(Equation 2) $$\bar{F} = \left[x, y, z, T_x, T_y, T_z\right]^T ,$$

where a superscript T denotes matrix transposition. The vector $\bar{I}_C$ is a 24 x 1 column vector of the currents in each of the 24 winding sections. The first twelve rows correspond to the currents in the winding sections 216b, 212a, ..., 215b, 211 a of the upper half stator 2 in the left-to-right order of Fig. 3, and the next twelve rows correspond to the currents in the corresponding winding sections of the lower half stator 2'.

The matrix $\underline{\underline{T}}_{CC}(\phi)$ is a 6 x 24 transformation matrix. It describes which forces, torque and moments result from any arbitrary distribution of currents in the winding sections. In practice, however, it is desired to invert Equation 1, i.e., calculate the set of currents (the current vector $\bar{I}_C$) required to obtain a given generalized force vector $\bar{F}$. Since the matrix $\underline{\underline{T}}_{CC}(\phi)$ is not a square matrix, additional conditions must be added. Eighteen linearly independent conditions are required in order to arrive at an invertible relationship between the generalized force vector and the currents.
Twelve conditions are imposed by connecting pairs of winding sections to form full windings. The two winding sections of each winding carry currents of the same magnitude, but opposite sign. These conditions can be used to recast equation 1 into the following form:

(Equation 3) $$\bar{F} = \underline{\underline{T}}_{out}(\phi) \cdot \bar{I} ,$$

where $\bar{I}$ is a 12 x 1 column vector of the currents in each (full) winding. The first six elements of this vector are the current values in windings 211, 212, 213, 214, 215 and 216 of the upper half stator 2. The next six elements are the current values in the corresponding windings of the lower half stator 2'. The matrix $\underline{\underline{T}}_{out}(\phi)$ is a 6 x 12 transformation matrix which is related to the matrix $\underline{\underline{T}}_{CC}(\phi)$ by:

(Equation 4) $$\underline{\underline{T}}_{out}(\phi) = \underline{\underline{T}}_{CC}(\phi) \cdot \underline{\underline{T}}_C ,$$

where the "connection matrix" $\underline{\underline{T}}_C$ is a 12 x 24 matrix describing the connection of the winding sections into full windings as in the following Equation 5.

(Equation 5):

$$
\underline{\underline{T}}_c =
\begin{bmatrix}
\begin{matrix}
0 & 0 & 0 & 0 & 0 & -1 \\
0 & 1 & 0 & 0 & 0 & 0 \\
-1 & 0 & 0 & 0 & 0 & 0 \\
0 & 0 & 1 & 0 & 0 & 0 \\
0 & -1 & 0 & 0 & 0 & 0 \\
0 & 0 & 0 & 1 & 0 & 0 \\
0 & 0 & -1 & 0 & 0 & 0 \\
0 & 0 & 0 & 0 & 1 & 0 \\
0 & 0 & 0 & -1 & 0 & 0 \\
0 & 0 & 0 & 0 & 0 & 1 \\
0 & 0 & 0 & 0 & -1 & 0 \\
1 & 0 & 0 & 0 & 0 & 0
\end{matrix}
& \mathbf{0} \\[4pt]
\mathbf{0} &
\begin{matrix}
0 & 0 & 0 & 0 & 0 & -1 \\
0 & 1 & 0 & 0 & 0 & 0 \\
-1 & 0 & 0 & 0 & 0 & 0 \\
0 & 0 & 1 & 0 & 0 & 0 \\
0 & -1 & 0 & 0 & 0 & 0 \\
0 & 0 & 0 & 1 & 0 & 0 \\
0 & 0 & -1 & 0 & 0 & 0 \\
0 & 0 & 0 & 0 & 1 & 0 \\
0 & 0 & 0 & -1 & 0 & 0 \\
0 & 0 & 0 & 0 & 0 & 1 \\
0 & 0 & 0 & 0 & -1 & 0 \\
1 & 0 & 0 & 0 & 0 & 0
\end{matrix}
\end{bmatrix}
$$

Each row of this matrix, relating to a winding section, has a single non-zero element 1 or -1, while each column, relating to a full winding, has two non-zero elements, one each of value 1 and -1.

The matrix $\underline{T}_{out}(\phi)$ is a 6 x 12 matrix; therefore, six conditions remain to be filled. In the following, such conditions are added by connecting the windings of each half stator in groups of three to form two three-phase systems each, as illustrated in Fig. 4, which results in an advantageous variant of the device of Fig. 1. Those ports of windings 211, 213 and 215 which were shown as being connected to ground in Fig. 1 are now connected together to form a first common node which is the star point of a first three-phase system S1. Likewise, the ports of windings 212, 214 and 216 which were shown as being connected to ground in Fig. 2 are connected together to form a second common node which is the star point of a second three-phase system S2. Another two three-phase systems S3 and S4 are formed in a similar manner in the lower half stator. By connecting three windings each to form a three-phase system, a condition is imposed upon the currents in the windings, namely, that the sum of the (signed) currents in the three windings is zero by Kirchhoff's first law.

These conditions are taken into account in the following equation:

$$\text{(Equation 6)} \qquad \bar{F}_e = \underline{\underline{T}}_e(\phi) \cdot \bar{I} \,,$$

where

$$\text{(Equation 7)} \qquad \bar{F}_e = \left[\bar{F}^T; 0,0,0,0\right]^T,$$

$$\text{(Equation 8)} \qquad \underline{\underline{T}}_e(\phi) = \left[\underline{\underline{T}}_{out}(\phi)^T; \underline{\underline{T}}_s^{\,T}\right]^T,$$

and

$$\text{(Equation 9)} \qquad \underline{\underline{T}}_s^{\,T} = \begin{bmatrix} 1 & 0 & & & \\ 0 & 1 & & & \\ 1 & 0 & & & \\ 0 & 1 & & 0 & \\ 1 & 0 & & & \\ 0 & 1 & & & \\ & & 1 & 0 & \\ & & 0 & 1 & \\ & & 1 & 0 & \\ & 0 & 0 & 1 & \\ & & 1 & 0 & \\ & & 0 & 1 & \end{bmatrix}.$$

Here, the 4 x 12 "topology matrix" $\underline{\underline{T}}_s$ describes the topology (connections) of the twelve windings into four three-phase systems.

Two conditions are now still left which can be freely chosen in a manner which leads to an invertible equation. One possible solution is to use the following conditions:

- The "torsion" force along the z axis which may result if different torques are generated by the upper and lower half stators, respectively, should be zero.
- The "compression" force which may result if different forces in the axial direction are generated by the upper and lower half stators, respectively, should be zero.

These two conditions lead to two additional relations between the winding currents, which may be expressed the following equations.:

(Equation 10)
$$\vec{F}_G = \underline{\underline{T}}_G(\phi) \cdot \vec{I} \, ,$$

(Equation 11)
$$\vec{F}_G = \left[\vec{F}_e{}^T ; 0,0\right]^T ,$$

(Equation 12)
$$\underline{\underline{T}}_G(\phi) = \left[\underline{\underline{T}}_e(\phi)^T ; \underline{\underline{T}}_T(\phi)^T ; \underline{\underline{T}}_{com}(\phi)^T\right]^T .$$

The 1 x 12 "torsion matrix" (actually, a row vector) $\underline{T}_{T}(\phi)$ and the 1 x 12 "compression matrix" $\underline{T}_{com}(\phi)$ describe the relationship between currents and torsion and compression force, respectively. Like $\underline{T}_{out}(\phi)$, they depend on factors such as the actual geometry and the rotation angle $\Phi$, and are therefore not given here explicitly. It is physically clear, however, that the conditions imposed by keeping torsion and compression zero are independent of all other conditions, and are sufficient for making the 12 x 12 matrix $\underline{T}_G(\phi)$ invertible.

As a result, Equation 10 may now be inverted, and for each rotation angle $\Phi$ and each generalized force vector $\vec{F}$, a unique current vector $\vec{I}$ $(\phi)$ for the winding currents may be calculated by a simple linear matrix equation:

(Equation 13)
$$\vec{I}(\phi) = \underline{\underline{T}}_R(\phi) \cdot \vec{F}_G$$

with

(Equation 13a)
$$\underline{\underline{T}}_R(\phi) = \left(\underline{\underline{T}}_G(\phi)\right)^{-1}$$

In theory, therefore, the inversion problem is now completely solved. In practice, however, this equation still leaves the problem that the matrix $\underline{T}_R(\phi)$ in principle must be known for each and every rotation angle $\Phi$. However, if both the axial (z) and tangential ($\Phi$) components of the Lorentz force generated by each winding section vary sinusoidally, a very simple interpolation is possible if the matrix is known at just two rotation angles. In practice, a sinusoidal variation is often the case to a reasonably good approximation. In other words, for a given current vector each element of the generalized force vector will often take, to a good approximation, the form $F_k(\phi) = F_k(0) \cdot \cos(Q\phi) + F_k(90°/Q) \cdot \sin(Q\phi)$, where Q is number of pole pairs on the rotor. Then it can be seen that, under the above-identified conditions of Equations (9) to (12), also the currents needed to generate a given generalized force vector will depend, to a good approximation, on the rotary position $\Phi$ in a sinusoidal manner.

It will therefore be sufficient to determine the matrix $\underline{T}_G(\phi)$ only once for two predetermined rotary positions, e.g., for $\Phi=0$ and $\Phi=90°/Q$. Two suitable rotary positions for a rotor with Q = 2 pole pairs are shown in Figs. 6 and 7. Of course, the procedure may be readily adapted for a different set of rotary positions being separated by different rotation angles than 90°/Q and to more than two rotary positions.

This result may also be rationalized by the following line of arguments. The geometry of the windings should be chosen such that the obtainable forces are independent of the rotation angle to a good approximation. In this case, and if the above approximation of a sinusoidal angular variation of the individual components of the generalized force vector holds, the (Euclidian) absolute value of the current vector required to generate a particular generalized force vector will be independent of the rotation angle for any given generalized force vector. The matrix $\underline{T}_G(\phi)$ may then be regarded as describing a multidimensional coordinate transformation, and its norm is independent of the rotation angle. If such a matrix is inverted to yield the matrix $\underline{T}_R(\phi)$, its coefficients preserve a sinusoidal dependence on the rotation angle.

The above derivation of the currents for a given generalized force vector is not the only possible derivation. A derivation of the same result is also possible along the following lines:

One may *start* with the requirement that the currents should have as little highfrequency components as possible in order to minimize losses. Ideally, therefore, currents are *desired* which contain only the lowest possible frequency, i.e., they should depend on the rotational angle according to $\bar{I}(\phi) = \underline{T}(\phi) \cdot \bar{F}_G$, where $\underline{T}(\phi) = \underline{A}\cos(Q\phi) + \underline{B}\sin(Q\phi)$ with some yet unknown matrices $\underline{A}$ and $\underline{B}$ representing real reference mappings which relate forces to currents. The task to be solved may then be seen to find matrices $\underline{A}$ and $\underline{B}$ which fulfill Equation (3), which describes the physical relationship between currents and forces, under the boundary conditions of the given wiring of the winding sections, i.e., Equations (4) and (5). There are many solutions for the matrices $\underline{A}$ and $\underline{B}$ ; therefore, an additional boundary condition is that the absolute value (Euclidian, i.e., root of the sums of the squared components) of the current vector should be minimized. It may be shown that the conditions of Equations (9) to (12) fulfill this boundary condition, and that the sought-after matrix $\underline{T}(\phi)$ is just the matrix $\underline{T}_R(\phi) = (\underline{T}_G(\phi))^{-1}$ determined above, and thus $\underline{T}_R(\phi) = \underline{A}\cos(Q\phi) + \underline{B}\sin(Q\phi)$ where $\underline{A} = \underline{T}_R(\phi=0)$ and $\underline{B} = \underline{T}_R(\phi=90°/Q)$.

The real reference matrices $\underline{A}$ and $\underline{B}$ need only be determined once, as they are characteristic for the specific bearing device. They may be determined as outlined above by an inversion of the current-force relationship under appropriate boundary conditions or, more generally, by a numerical optimization based on the current-force relationship.

The current vector at any given rotation angle may then be determined by the equation

$$\bar{I}(\phi) = (\underline{A} \cdot \bar{F}_G)\cos(Q\phi) + (\underline{B} \cdot \bar{F}_G)\sin(Q\phi).$$

The matrix multiplications are independent of the rotation angle and may be performed at a low repetition rate. The computations which must be performed at a high repetition rate thus only involve two evaluations of trigonometric functions and two times twelve multiplications and twelve additions of scalar values.

The (12 x 1) vectors $(\underline{T} \cdot \bar{F}_G)$ and $(\underline{T} \cdot \bar{F}_G)$ may be considered as the real and imaginary parts of a complex reference current vector $\bar{I}_{ref} = \underline{T}_k \cdot \bar{F}_G$ with $\underline{T}_k = \underline{A} + j\underline{B}$, where $j^2 = -1$. The matrix $\underline{T}_k$ represents a complex linear reference mapping. This representation shows even more clearly that the matrix $\underline{T}_R(\phi)$ in fact corresponds to a pure coordinate transformation, in particular, aside from a constant factor, a rotation matrix into the rotating frame of the electric currents.

This procedure may be generalized to the case that higher harmonics are present in the dependence of the forces/moments on the rotary position. Since generally the variation of rotary position is much faster than displacements along any other degree of freedom, the gains in computational speed by the proposed procedure are significant and enable the use of slower and thus cheaper hardware for control than a scheme employing a matrix multiplication for each and every rotary position.

A numerical evaluation of Equation 13 with this procedure for a realistic geometry showed that the resulting currents in all four three-phase systems are all on the same order of magnitude for any realistic generalized force vector $\bar{F}$ and for all rotation angles $\Phi$. This illustrated in Fig. 5, which shows the twelve current values in the windings as a function of the rotation angle $\Phi$ for an exemplary force vector $\bar{F} = \begin{bmatrix} 0.03, -0.05, 0.02, -0.0002, 0.001, 0.01 \end{bmatrix}^T$, expressed in arbitrary internal units. Since the rotor has $Q = 2$ pole pairs, the current signals repeat after 180° rotation; therefore, only the first half rotation is shown. All twelve currents have the same frequency, albeit with different amplitudes and phases.

It is worthwhile to discuss a few specific cases. For generating a pure motoring torque around the z axis, further analysis shows that preferably appropriately phase-shifted ordinary three-phase currents of equal peak value are provided to all four three-phase systems S1 to S4. All windings are fully used, and a high power density and efficiency is achieved. Constant torque can be provided at all rotor angles.

Net axial (z) force may be generated by operating one half stator in "field weakening" mode and the other half stator in "field strengthening" mode. The difference of forces on the two sides of the rotor yields the net axial force. The field weakening is achieved by shifting the phases of the motor currents (i.e., by applying reactive power).

Tilting moments around the *x* and *y* axes may result from two effects. Firstly, axial forces may vary along the circumference of the rotor; secondly, radial forces may have opposite direction on the two sides of the rotor disk. Both effects are easily implemented in the above-described scheme.

In the above analysis, approximate linearity between currents and forces was assumed. To ensure that this condition is fulfilled, advantageously the flux density of the permanent magnets is chosen to be below the saturation flux density of the magnetic material in the stator. Since there is a relatively large air gap for accommodating the coils, and since the permeability of the permanent magnets is low, the coil currents will not change the flux density significantly. Therefore, saturation effects will either be nonexistent or small, and the assumption of linearity is valid to a good approximation.

**Second embodiment**

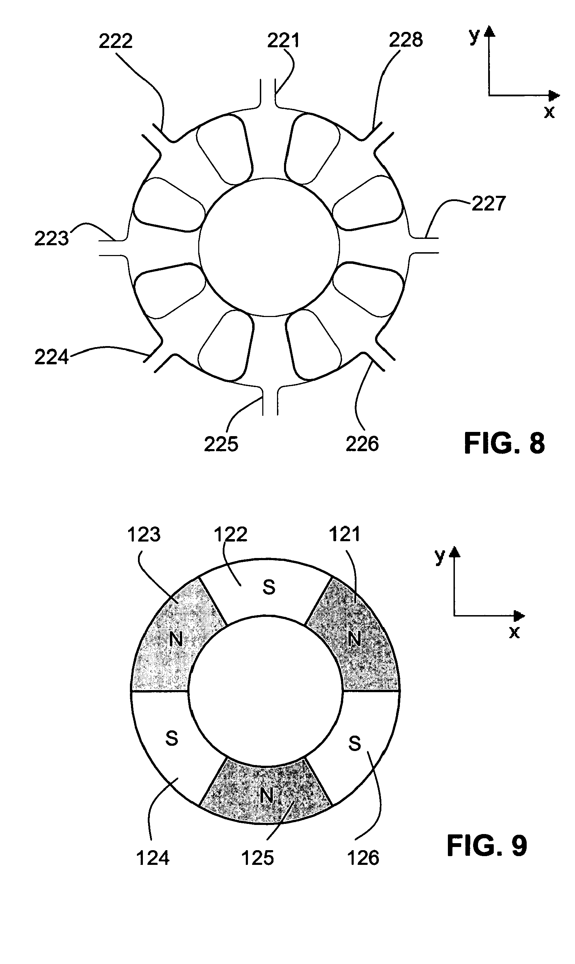

A second embodiment of the present invention will now be described with reference to Fig. 8. In this embodiment, the rotor disk again comprises four magnetic poles (Q=2), as already discussed in connection with Figs. 6 and 7. However, the stator is now provided on only one side of the disk. This stator comprises eight windings 221, 222, 223, 224, 225, 226, 227 and 228, as shown in Fig. 8. In the following, it will be shown that full control of all six rigid-body degrees of freedom may be achieved with such an arrangement. Matrices connecting the currents to the generalized force vector shall be given explicitly for this example under assumption of a sinusoidal dependence of forces/moments on the rotation angle Φ.

Let again $\bar{F} = \left[x, y, z, T_x, T_y, T_z\right]^T$ be the generalized force vector as defined in Equation 1 and

$\bar{I} = \left[I_1, I_2, I_3, I_4, I_5, I_6, I_7, I_8\right]^T$ be the current values in the windings 221, 222, ..., 228, respectively. For simplicity, concentrated radial winding sections are assumed, i.e., it is assumed that the radial winding sections in Fig. 8 are strongly localized in specific positions along the circumference of the rotor. It is further assumed that the magnetic flux density in both the axial and tangential directions varies sinusoidally along the circumference of the rotor for a fixed rotor position. Then the generalized force vector and the currents are related by

$$(\text{Equation 3'}) \qquad \bar{F} = \underline{\underline{T}}_{out}(\phi) \cdot \bar{I}$$

with

$$(\text{Equation 14}) \qquad \underline{\underline{T}}_{out}(\phi) = \underline{\underline{T}}_{out}(0^0)\cos(2\phi) + \underline{\underline{T}}_{out}(45^o)\sin(2\phi),$$

where

(Equation 15)
$$\underline{\underline{T}}_{out}\left(0^{o}\right)=\begin{bmatrix} 1 & 0 & 0 & 0 & -1 & 0 & 0 & 0 \\ 0 & 0 & 1 & 0 & 0 & 0 & -1 & 0 \\ 0 & 1 & 0 & -1 & 0 & 1 & 0 & -1 \\ 0 & 1 & 0 & 1 & 0 & -1 & 0 & -1 \\ 0 & 1 & 0 & -1 & 0 & -1 & 0 & 1 \\ -1 & 0 & 1 & 0 & -1 & 0 & 1 & 0 \end{bmatrix}$$

and

(Equation 16)
$$\underline{\underline{T}}_{out}\left(45^{o}\right)=\begin{bmatrix} 0 & -1 & 0 & -1 & 0 & 1 & 0 & 1 \\ 0 & -1 & 0 & 1 & 0 & 1 & 0 & -1 \\ 1 & 0 & -1 & 0 & 1 & 0 & -1 & 0 \\ 1 & 0 & 0 & 0 & -1 & 0 & 0 & 0 \\ 0 & 0 & 1 & 0 & 0 & 0 & -1 & 0 \\ 0 & 1 & 0 & -1 & 0 & 1 & 0 & -1 \end{bmatrix}.$$

In these equations, the elements of the generalized force vector are assumed to be expressed in suitable internal units. In particular, each element is to be regarded as containing a fixed factor which reflects the axial and tangential peak magnetic flux densities generated by the magnets on the rotor and the number of turns of the windings. It can easily be seen that all rows of the matrix $\underline{T}_{out}(\phi)$ are linearly independent for all values of Φ. Therefore, full control of all degrees of freedom is possible. This will still be true if the windings are not concentrated at a particular rotary position, and if the magnetic field distribution does not exactly vary sinusoidally, as long as both the current distribution in each winding and the field distribution are reasonably chosen.

In order to be able to invert Equation 3' uniquely, two more conditions should be added. These conditions are advantageously introduced by connecting one port of windings 221, 223, 225 and 227 to a common node (star point) in a four-phase star configuration. Likewise, windings 222, 224, 226 and 228 may be connected in a four-phase star configuration.

This adds two independent conditions which may, in full analogy to Equation 6, be expressed by

(Equation 6')
$$\vec{F}_{e} = \underline{\underline{T}}_{e}(\phi) \cdot \vec{I} ,$$

where

(Equation 7')
$$\vec{F}_{e} = \left[\vec{F}^{T}; 0,0\right]^{T} ,$$

(Equation 8')
$$\underline{\underline{T}}_e(\phi) = \left[\underline{\underline{T}}_{out}(\phi)^T ; \underline{\underline{T}}_s^{\ T}\right]^T ,$$

and

(Equation 9')
$$\underline{\underline{T}}_S = \begin{bmatrix} 1 & 0 & 1 & 0 & 1 & 0 & 1 & 0 \\ 0 & 1 & 0 & 1 & 0 & 1 & 0 & 1 \end{bmatrix}.$$

Since the rows of the matrix $\underline{\underline{T}}_S$ are linearly independent from each other and from the rows of the matrix $\underline{\underline{T}}_{out}(\phi)$, the matrix $\underline{\underline{T}}_e(\phi)$ is invertible for all values of $\Phi$. Therefore, for any desired generalized force vector $\vec{F}$ and any rotation angle $\Phi$, a unique current distribution $\vec{I}(\phi)$ may be obtained by

(Equation 17)
$$\vec{I}(\phi) = \left(\underline{\underline{T}}_e(\phi)\right)^{-1} \cdot \vec{F}_e .$$

Again, numerical simulations show that the peak values of the currents in the eight windings are on the same order of magnitude for any reasonable generalized force vector.

Full control of all six rigid-body degrees of freedom of the rotor is therefore possible by providing a single stator with eight windings according to the scheme of Fig. 8. A second stator may be added for redundancy. The same currents may be provided to the second stator as to the first stator, e.g., by connecting the corresponding windings in parallel.

**Third embodiment**

It is clear from the above analysis that many other arrangements of winding sections relative to the rotor and many other possibilities of connecting the winding sections to form complete windings exist which enable control of all six rigid-body degrees of freedom of a rotor with four magnetic poles (two magnetic pole pairs, $Q$=2). However, it is also possible to use different numbers of magnetic poles on the rotor. Solutions to the problem of control of all six degrees of freedom exist for any number of pole pairs larger than one.

A third embodiment of the present invention employs three pole pairs ($Q$=3), as shown in Fig. 9. The stator has the already discussed arrangement of stator windings shown in Fig. 8. It is a straightforward exercise to apply the analysis outlined above and to show that full control of all rigid-body degrees of freedom is possible for this arrangement.

As in the above-described second embodiment, there are eight degrees of freedom for choosing the currents in the windings, leaving two appropriate conditions to be chosen. For this embodiment, one such condition may be that all eight windings are connected to a single common node in a star configuration. The remaining degree of freedom can be used to minimize the currents.

**Fourth embodiment**

The arrangements of Figs. 4 and 8 are just two examples for a class of regular arrangement of windings which may be described as follows:

-   Each winding comprises two radial winding sections spaced along the rotational direction by an angle $\alpha$.
-   There are W windings arranged regularly (at equal intervals) along the rotational direction in a manner that each given winding overlaps with n other windings.
-   The angle $\alpha$ is chosen according to Equation 18:

$$\text{(Equation 18)} \qquad \alpha = (n+1)\cdot 180^{\circ}/W .$$

The arrangement of Fig. 4 corresponds to n=2 and W=6, while the arrangement of Fig. 8 corresponds to n=2 and W=8.

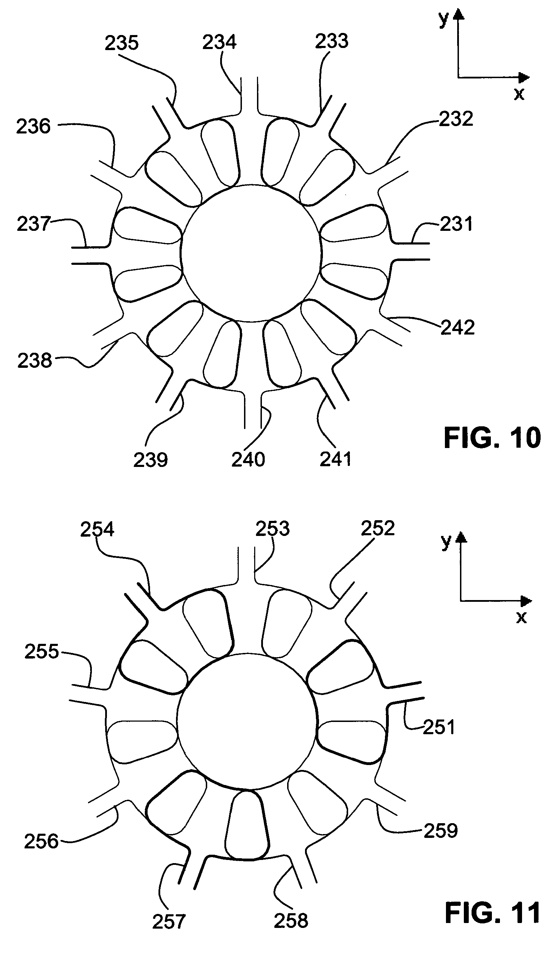

In the present fourth embodiment, yet another arrangement of this class is proposed. An arrangement of twelve windings 231, 232, 233, 234, 235, 236, 237, 238, 239, 240, 241 and 242 is illustrated in Fig. 10. It corresponds to n=2 and W=12. By applying the analysis of Examples 1 to 3 in straightforward analogy, it can be shown that full control of all six rigid-body degrees of freedom is possible for a rotor with Q=3 pole pairs with this arrangement of windings.

Due to the relatively large number of windings, such an arrangement is well adapted to a situation in which a relatively large-diameter rotor disk is employed. If a second stator is used on the other side of the rotor disk, the windings of the second stator may be connected in parallel to the windings of the first stator.

**Fifth embodiment**

Fig. 11 shows an arrangement of nine windings 251, 252, 253, 254, 255, 256, 257, 258 and 259. The arrangement corresponds to n=2 and W=9. The windings are most easily arranged in three different layers of three windings each. The first layer advantageously comprises windings 251, 254 and 257; the second layer, windings 252, 255 and 258; and the third layer, windings 253, 256 and 259. The windings of each layer may be connected to form a three-phase system each by connecting one port of each winding to a common node in a star configuration. Also with this arrangement, full control of all six rigid-body degrees of freedom of a rotor with $Q$=3 pole pairs is possible.

**Sixth embodiment**

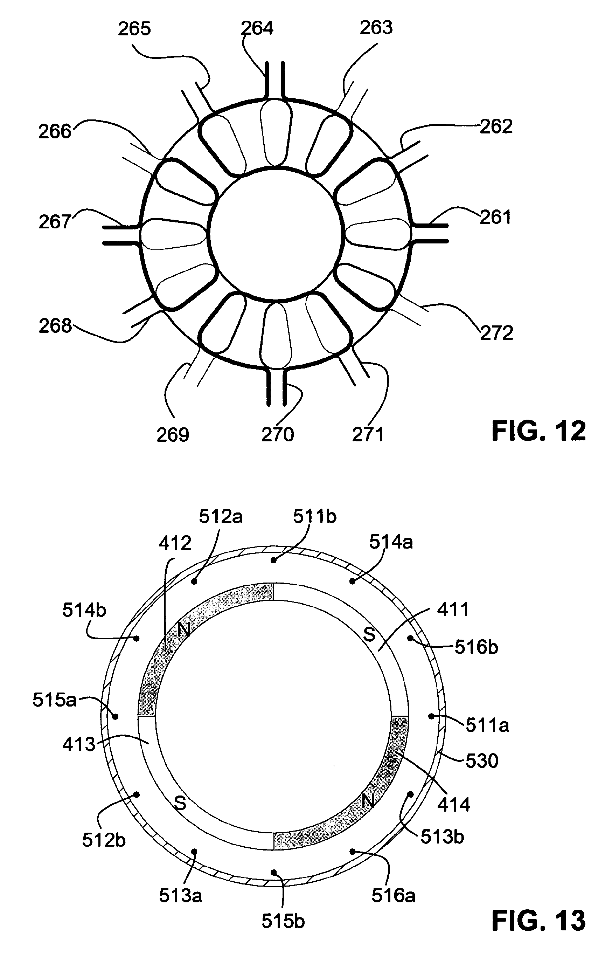

An example for an arrangement with a different value n of overlapping windings is shown in Fig. 12. Here, n=4 and W=12, and consequently, $\alpha = 75°$. This arrangement is advantageously implemented by arranging the windings in three layers. A first layer is formed by windings 261, 264, 267 and 270; second layer, windings 262, 265, 268 and 271; and third layer, windings 263, 266, 269 and 272. Also with this arrangement, full control of all six rigid-body degrees of freedom of a rotor with Q=3 pole pairs is possible.

**Seventh embodiment**

All previous embodiments comprised a rotor disk, the permanent magnets being disposed on the disk. However, the same considerations as in the previous examples may be applied to a device with a cylindrical rotor and one or more stators around the circumference of the cylindrical rotor. Such a situation shall now be discussed with reference to Figs. 13 to 17.

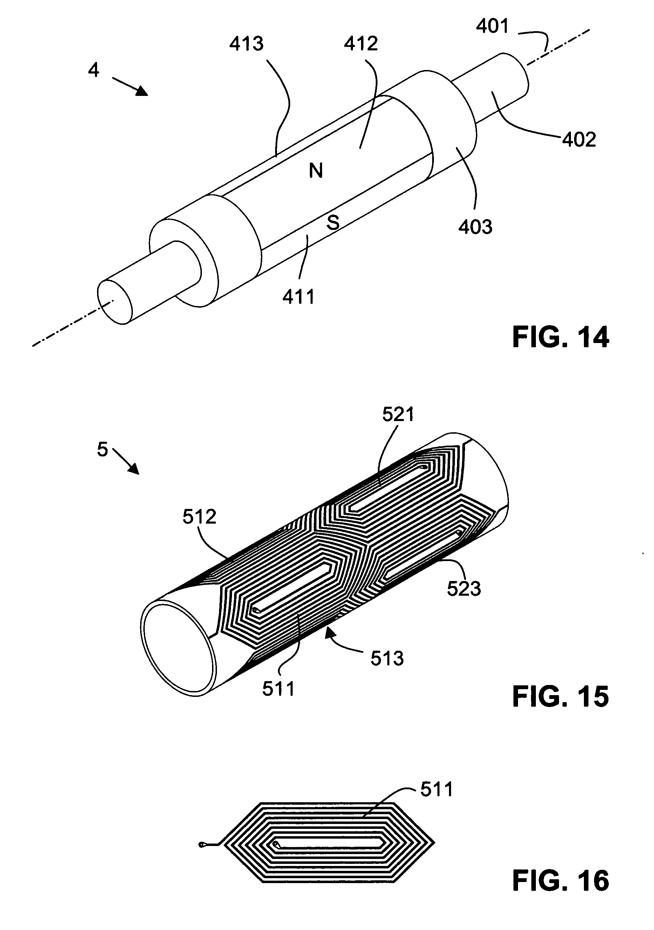

Fig. 13 shows, in a highly schematic representation, a cross section through a rotor comprising four permanent magnets 411, 412, 413 and 414 on its circumference. The magnets are magnetized radially. This rotor 4 is shown again in a schematic perspective view in Fig. 14. The rotation axis 401 of the rotor defines the z axis of a stator-fixed coordinate system.

The rotor is surrounded by a stator comprising regular arrangement of winding sections 511a, 511b, 512a, 512b, 513a, 513b, 514a, 514b, 515a, 515b, 516a and 516b. These winding sections extend in the axial (z) direction of the rotor. They are connected to form full windings 511, 512, 513, 514, 515 and 516. The windings are surrounded by a hollow cylinder 530 made of a soft magnetic material.

The magnets on the rotor generate magnetic field lines which are closed by the hollow magnetic cylinder 530. These field lines will generally have components in both a radially outward direction and a circumferential direction. For a suitable geometry, the dependence of the radial and circumferential components of the magnetic field can again be well approximated by a sinusoidal dependence.

The winding sections can be concentrated, as in Fig. 13, or they can be distributed aver a certain angular range. This is illustrated by the way of example in Fig. 15, which shows a schematic perspective partial view of a stator comprising distributed windings. The stator comprises two cylindrical layers of windings surrounded by a hollow cylindrical pole piece (not shown). Only the outer winding layer is shown in Fig. 15. This layer comprises the three windings 511, 512 and 513. Another three windings 514, 515 and 516 are arranged in an inner layer which is disposed within the outer layer. In addition to this first set of six overlapping windings, a second set of windings is provided on the stator. Again, only three windings are visible in Fig. 15, which are arranged in the outer layer, while a second set of three windings is arranged in the inner layer.

A preferred shape of the windings is illustrated in Fig. 16, which shows a schematic developed view of winding 511. This winding shape enables a highly efficient use of the available space. Since each winding is essentially single-layered, the windings may be implemented on a flexible substrate in the form of a so-called flexprint, which is a flexible printed circuit board. Of course, different shapes are possible, including windings which are not single-layered.

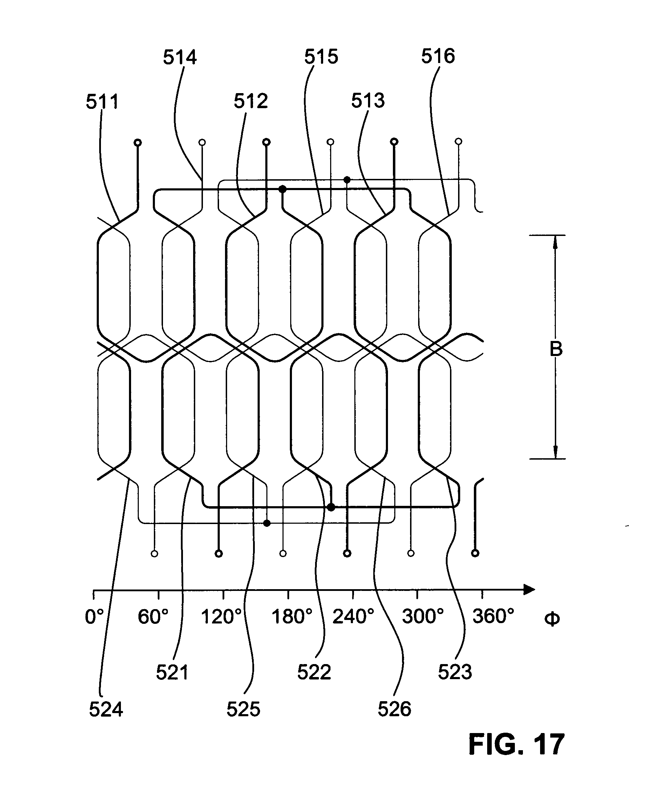

Fig. 17 shows a highly schematic developed view of the complete winding arrangement in the stator along cylindrical coordinates Φ and z. For simplicity, each winding is shown as having a single turn only, while in reality a plurality of turns will be present. Altogether, there are two groups of six overlapping windings each. The groups are separated along the axial (z) direction. A first group is disposed adjacent to a first (upper) region of the rotor in the axial direction, and a second group is disposed adjacent to a second (lower) region of the rotor in the axial direction. The axial range of the winding sections of both groups extending along the axial (z) direction is designated by the symbol B.

Each of the two groups of windings comprises two sets of three windings each of which are connected to a common node in a star configuration. In other words, the windings form two sets of two three-phase systems each. In this sense, the arrangement of windings of Fig. 17 is electrically equivalent to the arrangement of windings of Fig. 4.

Tangential forces are generated by interaction of the currents in the winding sections parallel to the rotation axis with the magnetic field of the rotor. The sum of all these tangential forces results in radial force components and motoring torque, depending on sign and magnitude of the currents. Axial forces result from interaction of the currents in the winding sections having a circumferential component with the radial components of the magnetic field.

A closer examination of the arrangements as depicted in Figs. 14 to 17, following the lines set out in the foregoing Examples 1 to 6, reveals that full control of all six rigid-body degrees of freedom is possible by providing appropriate currents to the windings.

### Amplifier construction

Some considerations in connection with the amplifier design for the present invention will now be discussed.

Amplifiers for driving the windings are in principle well known. These can be connected to the windings in a traditional way by connecting each terminal of each winding to an output port of an amplifier channel.

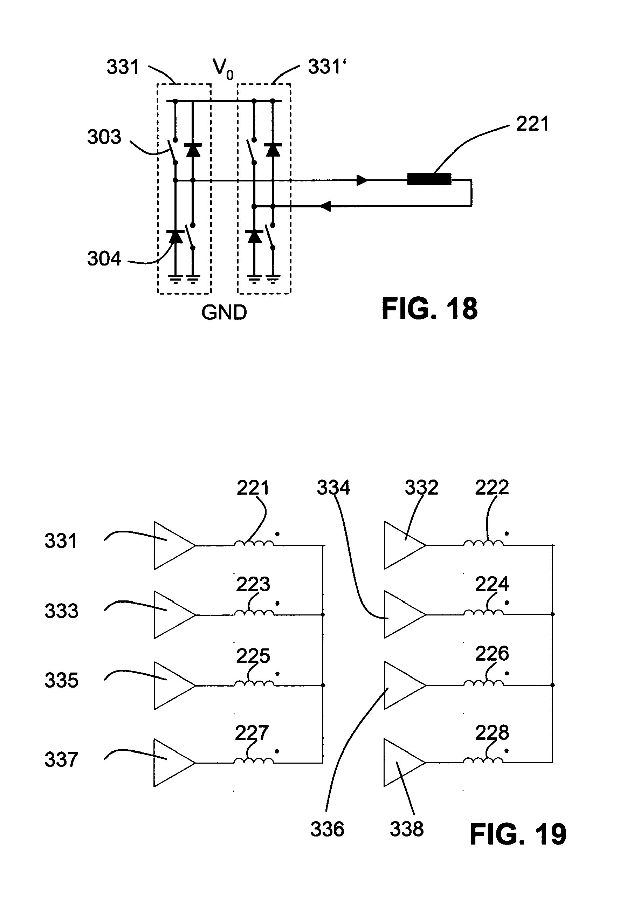

A widely used amplifier design is the so-called H bridge design illustrated in Fig. 18. The H bridge amplifier comprises two branches (half-bridges) 331, 331'. Each branch operates to connect a winding terminal either to a supply voltage $V_0$ or to ground GND by active switches (e.g., transistors) 303 and passive switches such as diodes 304. In this way, the winding as a whole can be connected to either "see" a positive voltage, a negative voltage or essentially a short circuit (via closed switches 303 and/or the optional diodes 304). Since the winding represents an essentially inductive load, positive or negative voltages will lead to positive or negative current changes. In this way, a current in the winding 221 can be set to a desired value and be maintained at that value. Modulation schemes of the switches 301 are well known in the art, specifically, pulse-width modulation schemes.

In this design, two half-bridges (branches of the H bridge) are needed for each winding, and two connections are needed between the amplifier unit and each winding.

A significant simplification of the design can however be achieved if a group of windings are connected to a common node in a star arrangement, as shown in Fig. 19, which shows a possible way of connecting the windings of Fig. 8. Only one half-bridge and only one single connection between amplifier and winding is now needed for driving each winding, which significantly reduces cost and complexity. This is true quite generally for any star-point connection scheme described in connection with the above embodiments.

Each star point connection imposes a condition upon the currents in the windings by Kirchhoffs first law, which can be readily taken care of in the mathematical framework described above in connection with the second embodiment.

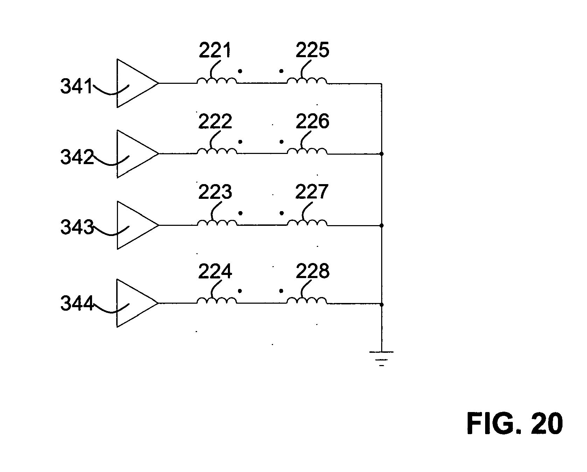

A different connection scheme for the same windings is shown in Fig. 20. Here, each pair of radially opposing windings is connected in series. This imposes four conditions on the currents. Since, in the above-described second embodiment, only two conditions could still be chosen, this means that two components of the generalized force vector will permanently be zero. Closer analysis reveals that these components are torque and axial force. While these degrees of freedom cannot be controlled, this connection scheme has the advantage of requiring only four amplifier channels and requiring reduced output power, since induced voltages during rotation are cancelled between the windings connected in series.

### Winding and sensor design

In a preferred implementation of the above-described first embodiment of the present invention, all windings and all sensors are implemented in an essentially planar design, preferably on printed circuit boards.

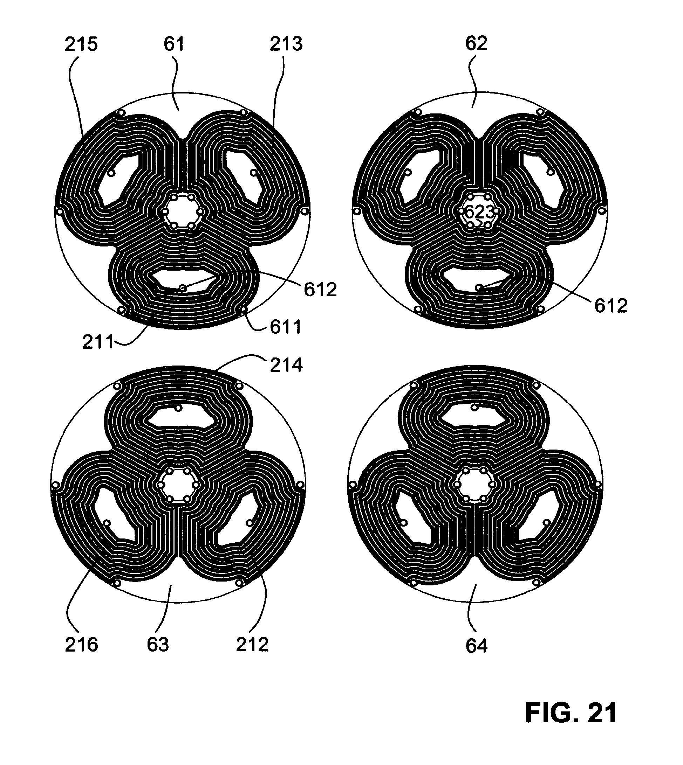

Fig. 21 shows a top view of the four conducting layers 61, 62, 63 and 64 of a four-layered printed circuit board (PCB) implementing the six windings 211-216 of Fig. 1. For winding 211, current is fed to the board at port 611 on the first layer 61 and flows through the winding to contact 612, which feeds the current through to the second layer 62. There, the current flows in the same sense through the second half of the winding to a central conducting ring 623. In a similar manner, currents flow in windings 213 and 215, which are likewise implemented in the first two layers 61 and 62. All three windings are connected by the central conducting ring 623 on the second layer, which implements the star point connection of the three-phase system formed by these three windings. In a similar manner, the third and fourth layers 63 and 64 implement the windings 212, 214 and 216. Instead of having a single four-layered PCB, the windings may also be implemented on two separate two-layered boards placed on top of each other.

A second four-layered PCB implements the six windings of the lower stator 2'. In this way, all windings are implemented on two four-layered (or four two-layered) printed circuit boards, which at the same time implement the four star-point connections.

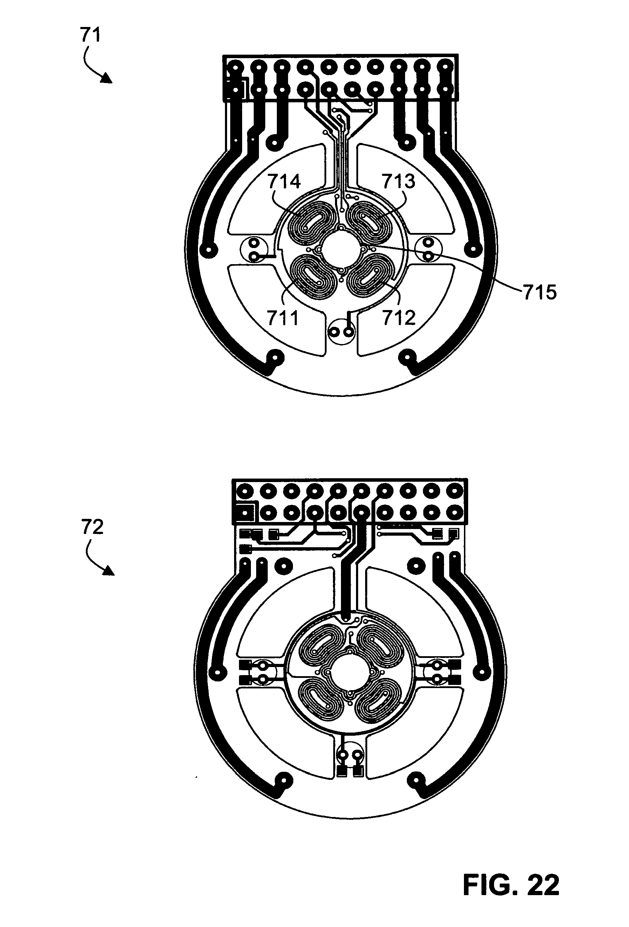

Also the sensors may be implemented as printed circuit boards. Fig. 22 shows a top view of the two layers 71, 72 of a two-layered PCB implementing a radial displacement sensor unit. The unit comprises a central coil 715 which is placed around the conductive shaft 102 of the rotor 1. Four pickup coils 711, 712, 713 and 714 are provided in the vicinity of the central coil 715. The principle of operation of such a radial sensing unit is described in WO-A 2004/048883, whose contents are herein incorporated by reference in their entirety for teaching a multiple-directional distance sensor. In particular, an AC voltage is provided to the central coil 715, and induced voltages in the pickup coils 711 to 714 are monitored. If the section of the shaft 102 surrounded by the central winding 715 is displaced radially, it moves closer to one of the pickup coils. Since the shaft is conductive, eddy currents in the shaft tend to "push away" the AC magnetic field generated by the central coil 715, thus moving the magnetic field distribution closer to a pickup coil on the opposite side of the shaft. Thereby, the induced voltages in the pickup coils depend on the radial displacements of the shaft 102. Two such printed circuit boards implementing such sensor units will generally be provided, one each below and above the rotor disk 103. Together, these sensor units provide signals from which both translational radial displacement and tilt displacements around the radial directions may be derived.

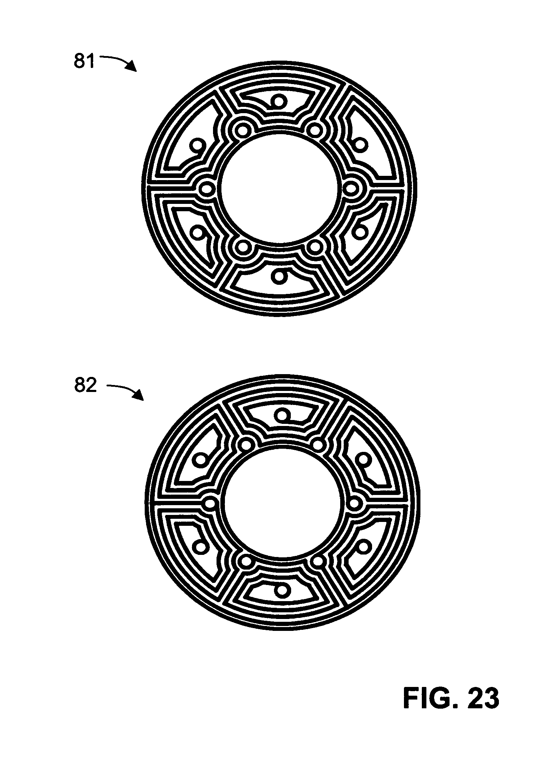

Fig. 23 shows a top view of the two layers 81, 82 of a two-layered printed circuit board implementing a rotation sensor (resolver) 314. The resolver comprises six eddy-current sensors as they are well known in the art, disposed at angular intervals of 60 degrees.

By using two of these rotation sensors, one on each side of the rotor, the sensor signals allow the measurement of axial displacement in addition to the angular position. Alternatively, a separate sensor could be used to measure axial displacement.

By combining these printed circuit boards with stator disks and suitable connectors, a very compact and cost-efficient magnetic bearing device may be constructed. This device is especially suitable for applications under restrictions of the available space, such as X-ray tubes, small turbo pumps and turbines, highspeed vacuum pumps, gyroscopes, side channel blowers etc.

From the foregoing description of preferred embodiments, it will be apparent that various changes are possible without departing from the scope of the present invention. In particular, other numbers of pole pairs and windings are possible; control of radial, axial and/or tilt displacements may be achieved by methods which do not rely on the mathematical treatment outlined above; and different numbers and kinds of sensors may be used.


**List of symbols and reference signs**

N     North pole
S     South pole
$x, y, z$     Spatial directions
$\Phi$     Rotation angle
$\alpha$     Rotational spacing of winding sections
W     Number of windings
Q     Number of magnetic pole pairs on the rotor

$\vec{I}$     Current vector
$I_i$     Individual current

$\vec{F}, \vec{F}_e, \vec{F}_G$     Generalized force vector

1     Rotor
101     Rotation axis
102     Rotary shaft
103     Rotor disk
111, 112, 113, 114     Permanent magnet
21, 122, 123, 124, 125, 126     1 Permanent magnet

2, 2'     Stator
201     Upper stator disk
202     Lower stator disk
211, 212, 213, 214, 215, 216     Winding
211a, 211b     Winding section
212a, 212b     Winding section
213a,213b     Winding section
214a,214b     Winding section
215a, 215b     Winding section
216a,216b     Winding section
211', 212', 213', 214', 215', 216'     Winding
221, 222, 223, 224, 225, 226, 227, 228     Winding
231, 232, 233, 234, 235, 236, 237, 238, 239, 240, 241, 242     Winding
251, 252, 253, 254, 255, 256, 257, 258, 259     Winding
261, 262, 263, 264, 265, 266, 267, 268, 269, 270, 271, 272     Winding
3     Control device
303     Active switch
304     Diode
310     Detection unit
311     Lower $x$ displacement sensor
312     Lower $y$ displacement sensor
313     Axial ($z$) displacement sensor
314     Rotation sensor
315     Upper $x$ radial displacement sensor
316     Upper $y$ radial displacement sensor
320     Control unit
330     Amplifier unit
331, 331', 332, 333, 334, 335, 336, 337, 338     Amplifier
341, 342, 343, 344     Amplifier
4     Cylindrical rotor
401     Axis of rotation
402     Rotary shaft
403     Rotor body
411, 412, 413, 414     Magnetic pole
5     Cylindrical stator
511, 512, 513, 514, 515, 516     Winding
521, 522, 523, 524, 525, 526     Winding
61     First layer
62     Second layer
63     Third layer
64     Fourth layer
611     Connection port
612     Contact
623     Conductive ring
71     First layer
72     Second layer
711, 712, 713, 714     Pickup coil
715     Central coil
81     First layer
82     Second layer

**Claims**

1. A magnetic bearing device, comprising

    - a rotor (1; 4) for rotation around a rotation axis (101) which comprises at least four magnetic poles (111-114; 121-126; 411-414) for generating a magnetic field, said magnetic poles being disposed at regular intervals around said rotation axis (101; 401) and having alternating polarities (N, S) around said rotation axis (101; 401);
- a stator (2, 2'; 5) in a confronting configuration with said rotor, said stator comprising at least six windings (211-216; 221-228; 231-242; 251-259; 261-272; 511-516; 521-526) arranged at regular intervals around said rotation direction;
- sensors (311-316) for detecting radial and axial translational displacements of said rotor along three linearly independent directions and for detecting a rotational state of said rotor; and
- a controller (3) receiving radial and axial translational displacement signals and rotational signals from said sensors (311-316) and supplying currents to said windings (211-216; 221-228; 231-242; 251-259; 261-272; 511-516; 521-526) for interacting with said magnetic fields to generate forces on said rotor (1; 4),

wherein said controller (3) is specifically adapted to supply,

- in response to a radial translational displacement and depending on the rotational state, a distribution of currents to said windings which acts to reduce said radial translational displacement, and,
- in response to an axial translational displacement and depending on the rotational state, a distribution of currents to said windings which acts to reduce said axial translational displacement.

2. The magnetic bearing device according to claim 1,

- wherein said rotor (1) comprises a disk (103) having a first and a second face,
- wherein said magnetic poles (111-114; 121-126) are arranged on at least said first face of said disk (103) such that said magnetic field has both axial and circumferential components,
- wherein said windings (211-216; 221-228; 231-242; 251-259; 261-272) are arranged in an axially confronting configuration with said disk (103) in a manner that each current through each winding has at least one radial component, and
- wherein said controller (3) is specifically adapted to selectively supply a distribution of currents to said windings in a manner that,

- in response to a radial translational displacement of said rotor (1), said radial components of said currents interact with said axial components of said magnetic field so as to generate selected tangential forces which add up to a radial restoring force, and,
- in response to an axial translational displacement of said rotor (1), said radial components of said currents interact with said circumferential components of said magnetic field so as to generate selected axial forces which add up to an axial restoring force.

3. The magnetic bearing device according to claim 2, wherein said rotor (1) comprises a first group of four magnetic poles (111-114) disposed on said first face and a second group of four magnetic poles (111'-114') disposed on said second face, wherein said stator comprises a first winding set of six windings (211-216) disposed in an axially confronting configuration with said first face and a second winding set of six windings (211-216) disposed in an axially confronting configuration with said second face (211'-216'), and wherein each winding in each winding set overlaps with two other windings of the same winding set.

4. The magnetic bearing device according to claim 3, wherein each of said first and second winding sets consists of two subsets of three non-overlapping windings each, and wherein the windings of each subset are connected in a star configuration.

5. The magnetic bearing device according to claim 1,

- wherein said rotor (4) comprises a cylindrical body (403) having a circumferential surface,
- wherein said magnetic poles (411-414) are arranged on said circumferential surface such that said magnetic field extends around said cylindrical body (403),
- wherein said windings (511-516, 521-526) are arranged in a radially confronting configuration around said cylindrical body (403) such that each current through each winding has both an axial and a circumferential component,
- wherein said controller (3) is specifically adapted to selectively supply a distribution of currents to said windings (511-516, 521-526) in a manner that,

- in response to a radial translational displacement of said rotor (4), said axial components of said currents interact with said magnetic field so as to generate selected tangential forces which add up to a radial restoring force, and

- in response to an axial translational displacement of said rotor (4), said circumferential components of said currents interact with said magnetic field so as to generate selected axial forces which add up to an axial restoring force.

6. The magnetic bearing device according to claim 5, wherein said rotor comprises four magnetic poles, and wherein said stator comprises a first winding set of six windings (511-516) and a second winding set of six windings (521-526), said second winding set being shifted from said first winding set along said rotational axis, and wherein each winding in each winding set overlaps with two other windings of the same winding set.

7. The magnetic bearing device according to claim 6, wherein each of said first and second winding sets consists of two subsets of three windings each, and wherein the windings of each subset are connected in a star configuration.

8. The magnetic bearing device according to claim 2 or 5, wherein the number of magnetic poles and the number of windings are selected from:

- four magnetic poles (111-114) and six windings (211-216), wherein each winding overlaps with two other windings;
- four magnetic poles (111-114) and eight windings (221-228), wherein each winding overlaps with two other windings;
- six magnetic poles (121-126) and eight windings (221-228), wherein each winding overlaps with two other windings;
- six magnetic poles (121-126) and nine windings (251-259), wherein each winding overlaps with two other windings;
- six magnetic poles (121-126) and twelve windings (231-242), wherein each winding overlaps with two other windings; or
- six magnetic poles (121-126) and twelve windings (261-272), wherein each winding overlaps with four other windings.

9. The magnetic bearing device according to one of the preceding claims, wherein said magnetic bearing device comprises sensors (311, 312, 315, 316) for determining tilt displacements around two non-coinciding radial tilt axes, wherein said controller receives signals from said sensors for determining tilt displacements, and wherein said controller (3) is specifically adapted to supply, in response to tilt displacements of said rotor (1; 4) and depending on the rotational state of said rotor (1; 4), a distribution of currents to said windings which act to generate a moment of force which acts to reduce said tilt displacements.

10. The magnetic bearing device according to one of the preceding claims, wherein said controller (3) is further specifically adapted to supply, depending on the rotational state of said rotor (1; 4), a distribution of currents to said windings which act to generate a motoring torque around said rotation axis (101; 401).

11. The magnetic bearing device according to one of the preceding claims, wherein each winding is a distributed winding.

12. The magnetic bearing device according to one of the preceding claims, wherein said windings are implemented as rigid or flexible printed circuit boards.

13. A method of operating a magnetic bearing device according to one of the preceding claims, said method comprising the steps of

(a) determining radial and axial translational displacements of said rotor (1; 4) along three linearly independent directions and, optionally, tilt displacements around two non-coinciding tilt axes, by said displacement sensors (311, 312, 313, 315, 316);
(b) based on said radial and axial translational and, optionally, tilt displacements, calculating a generalized force vector for reducing both radial and axial translational displacements and, optionally, tilt displacements;
(c) determining a rotary position ($\Phi$) of said rotor (1; 4);
(d) depending on said rotary position ($\Phi$), calculating a distribution of currents in said windings which interact with said magnetic field in a manner to yield a distribution of forces which approximate said generalized force vector;

(e) supplying said distribution of currents to said windings.

**14.** The method according to claim 13, wherein step (d) comprises the following substeps:

(d1) applying to said generalized force vector a complex reference mapping which maps generalized force vectors to currents, yielding a complex reference distribution of currents; and
(d2) for each rotary position ($\Phi$) determined in step (c), computing said distribution of currents from said complex reference distribution of currents.

**15.** The method according to claim 14, wherein said complex reference mapping is determined by the following steps:

(i) for each of two predetermined reference rotary positions, determining an approximate real linear mapping which maps currents in each winding to generalized force vectors caused by said currents;
(ii) determining a number of additional, linearly independent linear relations between said currents, wherein said number is the difference between the number of currents and the number of degrees of freedom to be controlled, optionally under the condition that the sum of squared current values is minimized;
(iii) from said real linear mappings, determining a complex linear mapping which maps currents to generalized force vectors under the condition that said additional relations are fulfilled;
(iv) inverting said complex linear mapping to yield said complex reference mapping.

**FIG. 1**

**FIG. 2**

**FIG. 3**

**FIG. 4**

**FIG. 5**

**FIG. 6**

**FIG. 7**

222    221    228    y
x

223    227

224    227

225    226    **FIG. 8**

123    122    121    y
x

S

N         N

S         S

N

124    125    126    **FIG. 9**

235 234 233

y

x

236

232

237

231

242

238

239 240 241

**FIG. 10**

254 253 252

y

x

255

251

256

259

257 258

**FIG. 11**

265    264    263

266

262

267    261

268    272

269    270    271

**FIG. 12**

512a    511b

412    514a

514b    411

516b

N    S

515a    511a

413    530

S    N    414

512b    513b

513a    516a

515b    **FIG. 13**

4

413    412    401

402

N

S

403

411

**FIG. 14**

5

521

512

523

511    513

**FIG. 15**

511

**FIG. 16**

FIG. 17

**FIG. 18**

**FIG. 19**

**FIG. 20**

**FIG. 21**

71

714    713

711    712

715

72

FIG. 22

81

82

**FIG. 23**

European Patent
Office

**EUROPEAN SEARCH REPORT**

Application Number

EP 05 40 5656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 3 845 995 A (WEHDE H,DT)<br>5 November 1974 (1974-11-05)<br>* the whole document * | 1,2,5,9,<br>10<br>3,4,6-8,<br>11-13 | INV.<br>G06F17/16<br>G05B19/02<br>H02K7/09<br>F16C39/06 |
| D,Y | US 6 611 073 B2 (KANEBAKO HIDEKI ET AL)<br>26 August 2003 (2003-08-26)<br>* the whole document * | 3,4,6-8 | |
| Y | US 6 114 788 A (VUILLEMIN ET AL)<br>5 September 2000 (2000-09-05)<br>* column 7, line 15 - line 35; figures<br>11A-11C * | 11,12 | |
| Y | US 5 708 346 A (SCHOEB ET AL)<br>13 January 1998 (1998-01-13)<br>* column 11, line 27 - column 13, line 10;<br>figures 8-13 * | 13 | |
| A | EP 1 257 042 A (SANKYO SEIKI MFG. CO. LTD)<br>13 November 2002 (2002-11-13)<br>* the whole document * | 1,8 | TECHNICAL FIELDS SEARCHED (IPC) |
| A | EP 0 566 806 A (SHINKO ELECTRIC CO. LTD)<br>27 October 1993 (1993-10-27)<br>* the whole document * | 8 | F16C<br>G01B<br>H02K<br>G06F |
| A | US 4 700 094 A (DOWNER ET AL)<br>13 October 1987 (1987-10-13)<br>* the whole document * | 11,12 | |
| A | US 4 644 205 A (SUDO ET AL)<br>17 February 1987 (1987-02-17)<br>* the whole document * | 1 | |

-/--

The present search report has been drawn up for all claims

| Place of search | Date of completion of the search | Examiner |
|---|---|---|
| Munich | 8 June 2006 | De Jongh, C |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons
.................................................................................
& : member of the same patent family, corresponding
 document

EPO FORM 1503 03.82 (P04C01)

**European Patent Office**

**EUROPEAN SEARCH REPORT**

Application Number

EP 05 40 5656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 236 130 B1 (AMRHEIN WOLFGANG ET AL) 22 May 2001 (2001-05-22) * column 4, line 61 - column 5, line 47; figures 9,10 * ----- | 13 | |
| A | US 6 267 876 B1 (ALLAIRE PAUL E ET AL) 31 July 2001 (2001-07-31) * column 4, line 29 - column 9, line 55; figure 3 * ----- | 13 | |

TECHNICAL FIELDS
SEARCHED      (IPC)

The present search report has been drawn up for all claims

| Place of search | Date of completion of the search | Examiner |
|---|---|---|
| Munich | 8 June 2006 | De Jongh, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 1 732 011 A1**

### ANNEX TO THE EUROPEAN SEARCH REPORT
### ON EUROPEAN PATENT APPLICATION NO.

EP 05 40 5656

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2006

| Patent document cited in search report | | Publication date | Patent family member(s) | | Publication date |
|---|---|---|---|---|---|
| US 3845995 | A | 05-11-1974 | DE | 2210995 B1 | 26-07-1973 |
| | | | FR | 2175126 A1 | 19-10-1973 |
| US 6611073 | B2 | 26-08-2003 | JP | 2002247823 A | 30-08-2002 |
| | | | US | 2002153790 A1 | 24-10-2002 |
| US 6114788 | A | 05-09-2000 | NONE | | |
| US 5708346 | A | 13-01-1998 | NONE | | |
| EP 1257042 | A | 13-11-2002 | JP | 2002325490 A | 08-11-2002 |
| | | | US | 2002180292 A1 | 05-12-2002 |
| EP 0566806 | A | 27-10-1993 | US | 5237229 A | 17-08-1993 |
| US 4700094 | A | 13-10-1987 | NONE | | |
| US 4644205 | A | 17-02-1987 | DE | 3584814 D1 | 16-01-1992 |
| | | | EP | 0177274 A2 | 09-04-1986 |
| | | | JP | 1739486 C | 26-02-1993 |
| | | | JP | 4024946 B | 28-04-1992 |
| | | | JP | 61085060 A | 30-04-1986 |
| US 6236130 | B1 | 22-05-2001 | WO | 9940334 A1 | 12-08-1999 |
| | | | EP | 0972140 A1 | 19-01-2000 |
| | | | JP | 2001523439 T | 20-11-2001 |
| US 6267876 | B1 | 31-07-2001 | AU | 5243799 A | 21-02-2000 |
| | | | CA | 2339179 A1 | 10-02-2000 |
| | | | EP | 1101269 A1 | 23-05-2001 |
| | | | JP | 2003527539 T | 16-09-2003 |
| | | | WO | 0007280 A1 | 10-02-2000 |
| | | | US | 2002005672 A1 | 17-01-2002 |

EPO FORM P0459

For more details about this annex : see Official Journal of the European Patent Office, No. 12/82

**EP 1 732 011 A1**

## REFERENCES CITED IN THE DESCRIPTION

### Patent documents cited in the description

- US 6611073 B
- WO 2004048883 A